# EUROPÄISCHE PATENTSCHRIFT

(11) **EP 0 531 908 B1**
(45) Veröffentlichungstag und Bekanntmachung des Hinweises auf die Patenterteilung: **15.11.1995**
(21) Anmeldenummer: 92115215.3
(22) Anmeldetag: 05.09.1992
(51) Int. Cl.: B65G 47/248, B65H 67/06

(54) **Fördereinrichtung**
Conveyer
Transporteur

(30) Priorität: 12.09.1991 DE 4130300; 27.09.1991 DE 4132244
(43) Veröffentlichungstag der Anmeldung: 17.03.1993
(73) Patentinhaber: BARMAG AG, D-42862 Remscheid (DE)
(72) Erfinder: Langen, Manfred, W-4050 Mönchengladbach 1 (DE); Teich, Udo, W-4322 Sprockhövel (DE); Schmitz, Hans-Peter, W-4050 Mönchengladbach 6 (DE)
(74) Vertreter: Pfingsten, Dieter, Dipl.-Ing.

(56) Entgegenhaltungen:
- EP-A- 0 053 588
- DE-A- 2 943 260
- DE-B- 1 072 535
- NL-A- 8 901 470
- US-A- 2 343 521
- US-A- 4 098 391
- US-A- 4 411 350

## Beschreibung

Die Erfindung betrifft eine Fördereinrichtung für Gegenstände nach dem Oberbegriff des Patentanspruches 1.

Eine solche Fördereinrichtung ist bekannt. Es gibt Fördereinrichtungen in den vielfältigsten Ausführungen, von denen die Fördereinrichtungen mit einer Rollenbahn besonders bekannt sind. Bei derartigen Rollenbahnen laufen die Gegenstände, beispielsweise Stückgut, über eine Vielzahl von quer zur Förderrichtung liegenden drehbar angetriebenen Rollen oder koaxial zueinander liegenden Rädern von einer Stelle im Betrieb zur nächsten Stelle im Betrieb.

Im allgemeinen liegen die Gegenstände lediglich unter Einwirkung ihres eigenen Gewichtes auf der Transportbahn auf. Üblicherweise sind also keine Haltevorrichtungen für die Gegenstände vorgesehen, um diese während des Transports auf der Transportbahn zu halten.

Für bestimmte Anwendungsfälle hat sich gezeigt, daß nachteilig an derartigen Transportbahnen ist, daß sie die Gegenstände lediglich in der Transportebene führen.

Eine Wendeeinrichtung zum Wenden der Gegenstände in einer Fördereinrichtung nach dem Oberbegriff des Patentanspruches 1 ist aus der DE-A-2943 260 bekannt. Diese beschreibt eine Vorrichtung, bei der in einem Maschinengestell zwei in einem rechten Winkel zueinander stehende Transportrollenbahnen mit drehend angetriebenen Transportrollen angeordnet sind, von denen jede Rollenbahn drallartig um ihre Mittellängsachse derart verdreht ist, daß die einlaufseitig waagerecht liegenden Rollen der ersten Rollenbahn (Übergabebahn) auslaufseitig senkrecht stehen und die einlaufseitig senkrecht zu den waagerecht liegenden Rollen der ersten Rollenbahn stehenden Rollen der zweiten Rollenbahn (Übernahmebahn) auslaufseitig waagerecht zu den senkrecht stehenden Rollen der erstens Rollenbahn liegen .

Durch Verwendung einer solchen Wendeeinrichtung in einer Fördereinrichtung ist es möglich, die zu transportierenden Gegenstände, beispielsweise Bücher, während des Transports aus einer Klebemaschine zu einer Schneidmaschine von einer Lage in eine andere Lage zu kippen, ohne daß es manueller Tätigkeiten hierzu bedarf.

Dabei wird der Gegenstand entlang der Transportbahn transportiert und erfährt eine Zwangsführung, die von der Transportbahngeometrie vorgegeben ist. Deshalb ist die Transportbahn der Wendeeinrichtung in Förderrichtung gesehen mit einer stetig zunehmenden Neigung versehen. Dieser Bereich wird im folgenden als Übergabebahn bezeichnet.

Der zu transportierende Gegenstand wird über den Längsbereich der Übergabebahn mit der ständig zunehmenden Neigung geführt. Dabei muß er der zunehmenden Neigung folgen bis die Gleichgewichtslage überschritten ist und der Gegenstand eine Kippbewegung in Richtung zur Übernahmebahn ausführt und vollendet. In dieser gekippten Lage wird der Gegenstand von der Übernahmebahn übernommen und weitertransportiert.

Die Anwendungsmöglichkeiten von Fördereinrichtungen gemäß Oberbegriff des Patentanspruches sind vielfältig und erstrecken sich auf alle Zweige von Industrie und Gewerbe in denen Gegenstände auf fest installierten Transportbahnen von einer Stelle im Betrieb zu einer anderen Stelle im Betrieb gefördert werden. Dabei kann die Fördereinrichtung mit einem oder mehreren dieser Wendeeinrichtungen ausgestattet sein, je nachdem ob das Stückgut einmal oder mehrmals gekippt werden muß, während es entlang der Transportbahn verbracht wird.

Bei der bekannten Fördereinrichtung erscheint es nachteilig, daß Gegenstände, die selbst keine geeigneten Auflageflächen besitzen, mit welchen sie auf den Transportrollen aufliegen und angetrieben werden, nicht gefördert werden können. Dies ist der Fall, wenn die Gegenstände in ihren Abmessungen zu klein sind und/oder gewölbte Oberflächen aufweisen.

Aufgabe der Erfindung ist es daher, die bekannte Fördereinrichtung mit geringem Kostenaufwand so auszugestalten, daß sie flexibler eingesetzt werden kann.

Diese Aufgabe wird gelöst durch eine Fördereinrichtung nach dem Oberbegriff des Patentanspruches 1 in Verbindung mit dessen kennzeichnenden Merkmalen.

Durch die Erfindung ist es möglich, Gegenstände unterschiedlicher Größe und Oberflächenform bzw. -beschaffenheit zu fördern. Es ist außerdem möglich, unterschiedliche Gegenstände zugleich und ohne Anpassung der Transportbahn zu befördern, da diese lediglich für die Transportpaletten ausgelegt sein muß.

Durch die Befestigungseinrichtung wird erreicht, daß die Gegenstände in ihrer Lage auf der Transportpalette eindeutig fixiert werden können und synchron mit der Transportpalette gekippt werden, ohne ihre Lage zu verändern. Die Befestigungseinrichtung ist dabei gemäß Anspruch 4 als Tragdorn ausgebildet.

Die Merkmale des Anspruchs 2 verdienen besondere Beachtung. Durch diese Maßnahmen wird erreicht, daß der Gegenstand während des Transports in Förderrichtung stets eindeutig fixiert gehalten wird, so daß ein unkontrolliertes Umkippen von der Übergabebahn zur Übernahmebahn zuverlässig verhindert wird. Diese Maßnahmen finden insbesondere dann Anwendung, wenn die Kippbewegung mit Rücksicht auf den Gegenstand behutsam erfolgen muß, um eine Beschädigung oder Beeinträchtigung des Gegenstandes zu vermeiden.

Bei dieser Weiterbildung der Erfindung liegt der Gegenstand während des Transports innerhalb einer V-förmigen Kehle, wodurch ein Abrutschen infolge der Schwerkraft verhindert wird. Während des Transports erfolgt die Kippbewegung, bis der Gegenstand die Kippbewegung vollendet hat.

Der Gegenstand hat die Kippbewegung vollendet, wenn er sich wieder in stabiler Gleichgewichtslage befindet, nachdem er aus einer stabilen Gleichgewichtslage in Kippbewegung versetzt wurde.

Die Merkmale des Anspruchs 5 stellen sicher, daß der Gegenstand, insbesondere das Stückgut stets mit möglichst großer Fläche sowohl auf der Übergabebahn als auch auf der Übernahmebahn aufliegt. Hierdurch läßt sich eine geringe Flächenpressung verwirklichen, da sich das Gewicht des Stückguts auf eine relativ große Fläche verteilt. Andererseits wird eine präzise Führung der Transportpalette während des Kippvorgangs erzielt, so daß Stöße auf das Stückgut unterbunden werden.

Das verzahnungsartige Ineinandergreifen der Rollen von Übergabebahn und Übernahmebahn im gemeinsamen Längsbereich bewirkt, daß die Transportpalette gemeinsam von den Rollen der Übergabebahn und der Übernahmebahn getragen wird, so daß ein ruckfreier Wechsel von der einen Bahn zur anderen Bahn stattfinden kann.

Dazu kann es in bestimmten Anwendungsfällen eines Produktionsprozesses wünschenswert sein, die Kippbewegung der Transportpalette nach Entnahme des Gegenstandes rückgängig zu machen, um die leere Transportpalette bei endloser Förderbahn dem Prozeß und einer erneuten Bestückung wieder zuzuführen. Hierzu dient Anspruch 6.

Die Merkmale des Anspruchs 7 stellen eine Verwendungsmöglichkeit der erfindungsgemäßen Fördereinrichtung dar, bei der es auf die Kippbewegung des Gegenstandes ankommt. Üblicherweise werden derartige Spulen nach dem Bespulvorgang so transportiert, daß das Fadenenende und die letzten Wicklungen der Spule nicht herabfallen können. Hierzu steht die Spulenachse horizontal. Diese einfache Maßnahme verhindert, daß sich die letzten Wicklungen, die üblicherweise nicht fixiert sind, z.B. infolge von Transporterschütterungen lösen können.

Die Palettierung der einzelnen Spulen erfolgt aber zweckmäßigerweise mit vertikal stehender Achse. Dies erleichtert die Ablage der Spulen auf den handelsüblichen Paletten. Da die Ablage der Spulen auf der Palette dicht an dicht erfolgt, so daß sich die Spulen gegenseitig umfangsmäßig berühren, werden die Fadenenden in dieser Lage am Herabfallen gehindert. Es kommt also darauf an, daß die Spulen auf ihrem Weg zur Verpackungsstelle einmal gekippt werden. Dies läßt sich durch die Verwendung der Fördereinrichtung mit den erfindungsgemäßen Transportpaletten einfach bewerkstelligen.

Die Merkmale des Anspruchs 8 ermöglichen einen für die Spulen berührungsfreien Transport zur Verpackungsstation unter Verhinderung des Herabfallens der Fadenenden bzw. der letzten Wicklungen.
Die Transportpalette nach Anspruch 9 ermöglicht es, Gegenstände, insbesondere Stückgut, mit beliebiger Oberflächenform bzw. -beschaffenheit und insbesondere Gegenstände mit nachgiebiger oder empfindlicher Oberfläche und unterschiedlicher Größe auf üblichen, aus Förderrollen gebildeten Fördereinrichtungen zu befördern und durch Prozeß- oder Kontrollstufen zu führen, in denen die Gegenstände von verschiedenen Seiten zugänglich sein müssen.

Im folgenden wird die Erfindung anhand von Ausführungsbeispielen näher erläutert:
Es zeigen:
- Fig. 1: eine mögliche Ausführungsform der Erfindung
- Fig. 2: die Verwendung einer erfindungsgemäßen Transporteinrichtung in einer Spinnanlage zur Herstellung von Kunstfasern
- Fig. 3: eine Draufsicht auf eine Ausführungsform der Erfindung

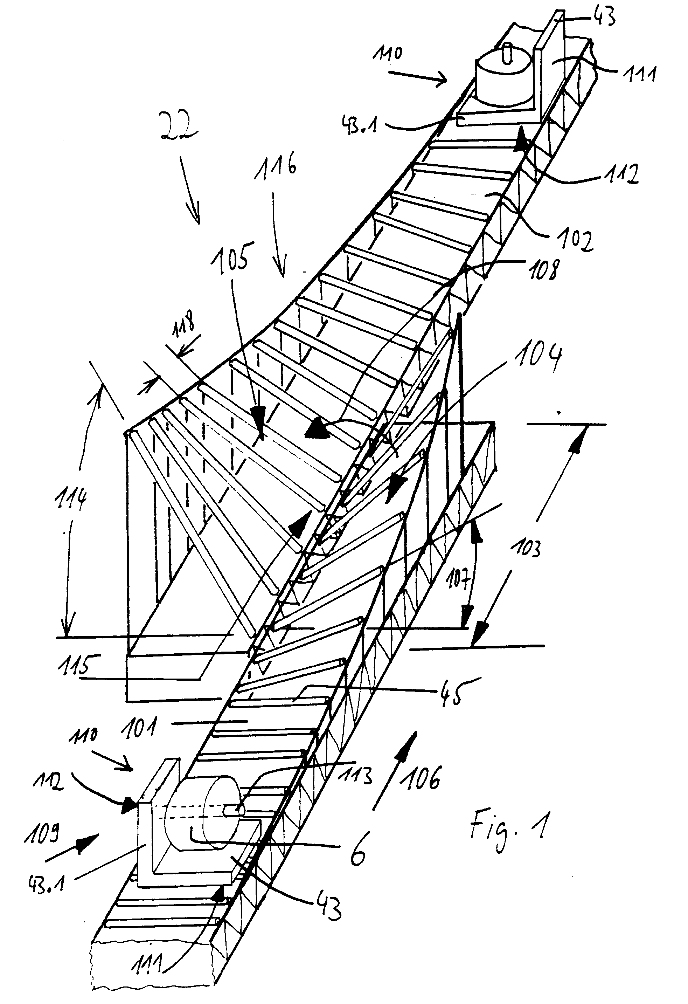

Fig. 1 zeigt eine Transportbahn 22 für den innerbetrieblichen Materialfluß von Stückgut 109. Die Transportbahn 22 besteht aus einem ersten Bahnstück 101 und einem zweiten Bahnstück 102, welche sich in einem Längsbereich 103 überlappen. In diesem Längsbereich bildet das erste Bahnstück 101 eine Übergabebahn 104 und das zweite Bahnstück bildet eine dazu parallele und benachbarte Übernahmebahn 105.

In Förderrichtung 106 gesehen weist die Übergabebahn 104 eine zur Übernahmebahn 105 ständig zunehmende Neigung 107 auf. Die Neigung nimmt soweit zu, daß das Stückgut 109 beim Überfahren des Längsbereichs 103 eine Kippbewegung 108 von der Übergabebahn 104 zur Übernahmebahn 105 vollendet.

In diesem besonderen Fall ist die Transportbahn 22 zur Förderung einer Vielzahl von gleichartigem Stückgut 109 ausgelegt. Es sind also alle einzelnen transportierten Stückgüter 109 untereinander identisch.

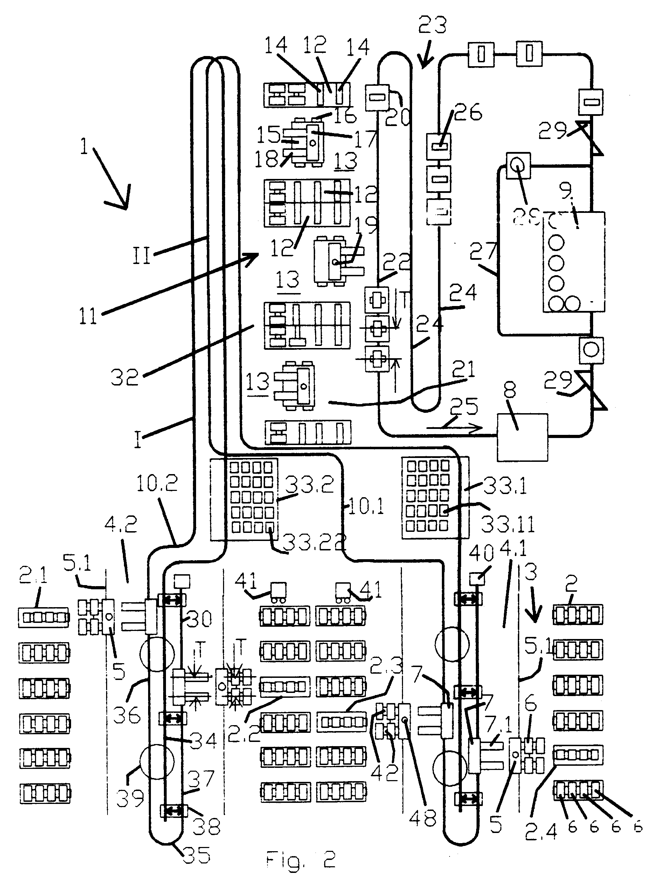

Dieses Stückgut 109 besteht aus Transportpaletten 110 zum Palettieren von Gegenständen. Die Gegenstände sind in diesem Fall Garnspulen 6, die im folgenden auch als Vollspulen bezeichnet werden. Da die Garnspulen einzeln auf den Transportpaletten 110 sitzen, werden die Transportpaletten 110 im folgenden auch als Einzelförderer 20 bezeichnet, soweit sie in der speziellen Verwendung gemäß Fig. 2 Verwendung finden.

Die Transportpaletten 110 weisen zwei Auflageflächen 111, 112 auf, welche so zueinander stehen, daß jeweils eine der Auflageflächen 111 auf der Übergabebahn 104 und die andere der Auflageflächen 112 auf der Übernahmebahn 105 aufliegt.

Die Transportpaletten 110 werden aus zwei rechtwinklig zusammengesetzten Transportplattformen 43, 43.1 gebildet, wobei vor Überfahren des Längsbereichs 103, in welchem die Transportpalette 110 gekippt wird, die Unterfläche der Transportplattform 43 die erste Auflagefläche 111 bildet und die nach links weisende Außenfläche der Rückenplattform 43.1 die zweite Auflagefläche 112.

Im oberen Teil des Bildes ist eine in Förderrichtung 106 ablaufende gekippte Transportpalette 110 dargestellt. Hier steht die ursprünglich horizontal liegende Transportplattform 43 vertikal und die ursprünglich nach unten weisende erste Auflagefläche 111 weist nach rechts. Weiterhin liegt die ursprünglich als Rücken-Plattform 43.1 bezeichnete Plattform nun auf der Transportbahn 22 auf, und zwar mit ihrer ursprünglich nach links weisenden zweiten Auflagefläche 112. Demzufolge erfolgte während des Überlaufens der Transportbahn von der Übergabebahn zur Übernahmebahn eine Kippbewegung 108 der Transportpalette 110 entgegen dem Uhrzeigersinn.

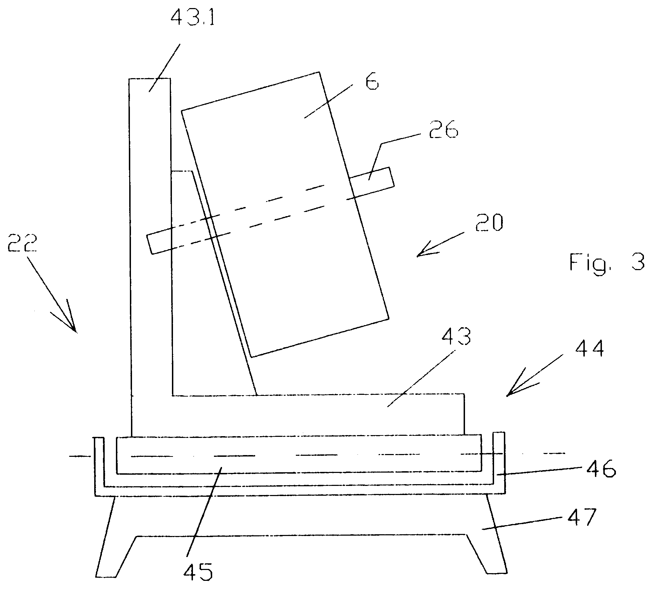

Die Transportpaletten sind mit Befestigungseinrichtungen 113 versehen, an welchen die palettierten Gegenstände, die hier die Vollspulen 6 sind, befestigt sind. Die Befestigungseinrichtungen sind als auskragende Tragdorne (s.Fig. 3, Bezugszeichen 26) ausgebildet, auf welche die Vollspulen 6 fest aufgesteckt sind. Mit ihrem anderen Ende sind die Tragdorne fest in den Rückenplattformen 43.1 verankert.

Weiterhin ist die Übernahmebahn 105 im Bereich der Kippstelle, welche sich abhängig von der Schwerpunktslage und der Geometrie der Transportpalette 110 an einer bestimmten Stelle innerhalb des Längsbereichs 103 befindet, so zur Übergabebahn 104 geneigt (114), daß sich zwischen der Übergabebahn 104 und der Übernahmebahn 105 eine V-förmige Kehle 115 bildet. In Förderrichtung 106 gesehen weist die Übernahmebahn 105 einen Bereich 116 auf, der hinter der Kippstelle liegt. In diesem Bereich 116 nimmt die Neigung 114 der Übernahmebahn 105 stetig ab, und zwar im wesentlichen bis zur Horizontalen.

In diesem Fall wird die V-förmige Kehle von den Flächen aufgespannt, welche die Übergabebahn und die Übernahmebahn bilden.
Dieses Ausführungsbeispiel zeigt eine weitere Besonderheit. Der Winkel zwischen den Schenkeln des V ist so bemessen, daß das Stückgut 109 mit im wesentlichen zwei seiner Flächen 111,112 zwischen der Übergabebahn 104 und der Übernahmebahn 105 entlanggeführt wird. Im vorliegenden Fall stehen die Flächen 111 und 112 senkrecht aufeinander. Aus diesem Grunde schließen Übergabebahn und Übernahmebahn im Längsbereich 103 ebenfalls einen rechten Winkel ein, um das Stückgut 109 in beidseitiger Anlage der Flächen 111,112 zu führen.

Die Übergabebahn 104 und die Übernahmebahn 105 bestehen aus einer Vielzahl von in Förderrichtung 106 hintereinander angeordneten drehbaren Rollen 45, die quer zur Förderrichtung 106 liegen, wobei die Rollenabstände 118 so bemessen sind, daß in dem Längsbereich 103 die Rollen jeweils einer der Bahnen zwischen den Rollen der jeweils anderen Bahn liegen. Die somit wechselseitig aufeinanderfolgenden Rollen der beiden Bahnen bilden für das geförderte Stückgut eine präzise Führung während des Kippens im Längsbereich 103.

### Zur Funktion:

Die im Vordergrund des Bildes gezeigte Transportpalette 110 läuft in der Förderrichtung 106 in Richtung zu dem gemeinsamen Längsbereich 103 zwischen der Übergabebahn 104 und der Übernahmebahn 105. Dabei nimmt sie an jeder Stelle der Übergabebahn diejenige Winkellage an, welche ihr von der Übergabebahn 104 aufgezwungen wird. Demzufolge muß sie der zunehmenden Neigung 107 der Übergabebahn 104 folgen, je weiter sie sich dem Längsbereich 103 nähert. Dabei nähert sie sich einer Lage, in welcher sie das Bestreben hat, nach links in Richtung zur Übernahmebahn 105 zu kippen. Gleichzeitig wird die zweite Auflagefläche 112 der Rückenplattform 43.1 in Anlage an die Rollen der Übernahmebahn 105 gebracht. Somit liegt die Transportpalette 110 fest zwischen Übergabebahn 104 und Übernahmebahn 105, während sie in Förderrichtung 106 weiterläuft.

Dabei liegt die erste Auflagefläche 111 an den Rollen der Übergabebahn 104 an und gleichzeitig liegt die zweite Auflagefläche 112 an den Rollen der Übernahmebahn 105 an. Nachdem der Punkt des Umkippens, der nicht im einzelnen gezeigt werden kann, passiert ist, wird die Transportpalette 110 noch soweit von der Übergabebahn 104 im gleichen Drehsinn wie bis zur Kippbewegung 108 mitgeführt, bis sie sicher auf der Übernahmebahn 105 ablaufen kann. Insofern kann durch die Anordnung der Übergabebahn 104 und der Übernahmebahn 105 in Form einer V-förmigen Kehle 115 auch verhindert werden, daß eine Transportpalette 110 infolge zu starker Neigung quer zur Transportrichtung 106 abrutscht bevor sie den Punkt des Kippens überfährt, bzw. nach Überfahren dieses Punktes wieder in rutschsichere Position gebracht worden ist.

Wie Fig. 2 erkennen läßt, besteht eine erfindungsgemäße Spinnanlage 1 zur ununterbrochenen Herstellung einer Vielzahl von Chemiefäden aus einer Vielzahl von Spulmaschinen 2, die in Spulmaschinen-Kolonnen 3 längs eines Bedienungsganges 4.1, 4.2 angeodnet sind. Gezeigt sind hier zwei Bedienungsgänge 4.1, 4.2, welche zueinander parallel ausgerichtet sind. Auf jeder Seite je eines der Bedienungsgänge ist jeweils eine Spulmaschinen-Kolonne 3 parallel zu dem Bedienungsgang 4.1, 4.2 angeordnet, wobei die Spulspindeln der einzelnen Spulmaschinen senkrecht in den Bedienungsgang ragen.

In jedem der Bedienungsgänge ist ein Doffer 5 auf einem Doffer-Fahrweg 5.1 fahrbar angeordnet, und zwar so, daß der Doffer 5 entlang des Doffer-Fahrwegs 5.1 von Spulmaschine zu Spulmaschine fahren kann. Im vorliegenden Ausführungsbeispiel ist jeder der Spulmaschinen-Kolonnen ein separater Doffer 5 zugeordnet. Es soll jedoch ausdrücklich darauf hingewiesen werden, daß es auch möglich ist, in jedem Bedienungsgang einen einzigen Doffer auf einem Doffer-Fahrweg fahren zu lassen, der an beiden Spulmaschinen-Kolonnen vorbeiführt.

Der Doffer 5 übernimmt an der jeweils angefahrenen und bedienten Spulmaschine 2.1, 2.2, 2.3, 2.4 Vollspulen 6 von der Spulspindel und übergibt diese an einen Förderwagen 7, der zu diesem Zweck an der jeweils angefahrenen und bedienten Spulmaschine 2.1, 2.2, 2.3, 2.4 in Warteposition ist, um die Vollspulen zu übernehmen. Die Übernahme der Vollspulen auf den Förderwagen erfolgt mittels Tragdorn 7.1. Hierauf wird noch eingegangen werden.

In der vorliegenden Anmeldung wird unter einem Doffer eine längs der Maschinenfront von Spulmaschine zu Spulmaschine fahrbare Vorrichtung verstanden, welche am Ende einer Spulreise die Abnahme der produzierten Vollspulen vornimmt. Diese Abnahme beinhaltet die Entfernung der Vollspulen von der jeweils bedienten Spulspindel und die Übergabe dieser Vollspulen zum Abtransport an einen Förderwagen.

Der Zeitpunkt der Abnahme der produzierten Vollspulen wird von dem Doffer überwacht, wobei zweckmäßigerweise der Doffer auch die jeweils erforderliche Anzahl von Leerhülsen anfordert.

In einer besonderen Ausführungsform ist der Doffer zusätzlich dafür ausgelegt, die soeben bediente Spulspindel nach der Abnahme und der Übergabe der Vollspulen mit frischen Leerhülsen zu bestücken, damit die Spulmaschine den Spulbetrieb weiterführen kann. Ein solcher Doffer ist z.B. aus der DE-A-24 49 415 in allen Einzelheiten bekannt. Bei dieser Ausführung werden durch eine an dem Doffer vorbeilaufende Förderkette ständig die erforderliche Anzahl der benötigten Leerhülsen vorbeigeführt.

Weiterhin ist aus der DE-A-21 28 974 ein Spulenwechselwagen bekannt, der einen Austausch von Vollspulen gegen Leerhülsen vollzieht. Bei dieser Ausführung werden die Leerhülsen auf dem Spulenwechselwagen mitgeführt und mittels zweier Greifarme auf die Spulspindel der Spulmaschine übergeben.

Weiterhin ist aus der DE-A-21 23 689 eine fahrbare Spulenwechseleinrichtung bekannt, bei welcher die Vollspulen auf eine fahrbare Spulentransporteinrichtung gegeben werden. Anschließend wird die Spulentransporteinrichtung zur Einzelkontrolle gefahren, wo die einzelnen Vollspulen entweder Stück für Stück oder stichprobenartig einer Qualitätsprüfung unterzogen werden, um anschließend eine Verpackungsstation zu durchlaufen.

Jedem der Bedienungsgänge 4.1, 4.2 ist eine Förderbahn 10.1, 10.2 zugeordnet. Auf jeder der Förderbahnen ist eine Mehrzahl von einzelbeweglichen Förderwagen 7 fahrbar, wobei jeder einzelne Förderwagen über einen separaten Antrieb verfügt und unabhängig von anderen Förderwagen angehalten werden kann.

Die Förderbahnen verlaufen zwischen den Stirnseiten der Spulmaschinen-Kolonnen und einem Zwischenspeicher 11, und zwar so, daß die Förderwagen auf diesem Weg behinderungfrei hin- und zurückfahrbar sind.

Jede der einzelnen Förderbahnen ist hierzu als geschlossene Förderbahn ausgebildet, und weist eine Hinspur 30 von dem Bedienungsgang 4.1, 4.2 zu dem Zwischenspeicher 11 auf, und eine Rückspur 31 in umgekehrter Richtung, wobei sich jeweils eine geschlossene Bahn in dem Bedienungsgang 4.1, 4.2 und von dort bis vor eine der Stirnseiten 32 des Lagergangs 13 des Zwischenspeichers 11 erstreckt.

Als Hinweg ist in der vorliegenden Anmeldung derjenige Weg bezeichnet, welchen die Förderwagen, beladen mit den zu einer Spulspindel gehörigen Vollspulen, bis zur Übergabe der Vollspulen an den Zwischenspeicher zurücklegen.

Als eine Besonderheit ist es anzusehen, daß die Rückspur 31 jeder Förderbahn 10.1, 10.2 an je einem Leerhülsenspeicher 33.1, 33.2 vorbeiführt, wo die Aufnahme der für eine Spulspindel erforderlichen Leerhülsen 33.11, 33.22 durch die Tragdorne 7.1 der Förderwagen 7 erfolgt.

Eine weitere Besonderheit ist, daß die Rückspur 31 jeder der geschlossenen Förderbahnen 10.1, 10.2 sich als Sackgasse 34 längs des Bedienungsgangs 4.1, 4.2 erstreckt, und daß die Hinspur im Bedienungsgang U-förmig ausgeführt ist, wobei ein mit dem Zwischenspeicher 11 verbundener erster Ast 36 auf einer der beiden Seiten der Rückspur 31 liegt, und wobei ein zweiter Ast 37 an dem dem Zwischenspeicher 11 zugewandten Ende des Bedienungsggangs 4.1, 4.2 endet, und auf der anderen Seite der Rückspur 31 liegt, und wobei der erste Ast 36 und der zweite Ast 37 an dem von dem Zwischenspeicher 11 abgewandten Ende durch einen Umkehrbogen 35 verbunden sind, und daß der erste Ast 36 und der zweite Ast 37 mit der Rückspur 31 durch Weichen verbunden sind.

Hierzu ist die Rückspur 31 mit dem ersten Ast 36 der Hinspur 30 über Drehweichen 39 verbunden, welche die von der Rückspur 31 kommenden Förderwagen 7 unter Umkehrung der Fahrtrichtung auf den ersten Ast 36 der Hinspur 30 einschleusen.

Weiterhin ist hierzu die Rückspur 31 mit dem zweiten Ast 37 der Hinspur 30 über Parallelweichen 38 verbunden, welche die von der Rückspur 31 kommenden Förderwagen 7 unter Beibehaltung der Fahrtrichtungen auf den zweiten Ast 37 einschleusen.

In Fahrtrichtung der Rückspur 31 gesehen sind insgesamt fünf Weichen hintereinander angeordnet, wobei Drehweichen und Parallelweichen wechselnd aufeinander folgen. Weiterhin sind Drehweichen und Parallelweichen in enger Nachbarschaft zueinander angeordnet.

Die derartige Weichenanordnung stellt sicher, daß nicht jeder der Förderwagen 7 stets den gesamten U-förmigen Weg umfahren muß, wenn eine der Spulmaschinen bedient werden muß. Weiterhin ist sichergestellt, daß jeder der Förderwagen auf jedem möglichen Weg stets so an einem Doffer ankommt, daß seine auskragenden Tragdorne in der richtigen Aufnahmeposition dem Doffer zugewandt sind.

Die jeweils einem der Bedienungsgänge zugeordneten Förderbahnen sind voneinander unabhängig, indem die Förderbahnen 10.1, 10.2 in unterschiedlichen Förderbahnhöhen I,II an dem Zwischenspeicher vorbeiführen. Die Förderbahnhöhen I,II weisen einen so großen vertikalen Abstand voneinander auf, daß sich die einzelnen Förderwagen der beiden Förderbahnen nicht berühren können.

Die von den Förderwagen aufgenommenen Vollspulen sollen nach Durchlaufen der Einzelkontrolle 8 zur Verpackungsstation 9 gebracht werden.

Da die Vollspulen auf den Spulmaschinen ununterbrochen produziert werden, sind alle Förderwagen im 24 Stunden Betrieb beschäftigt, um die Vollspulen von den Spulmaschinen zu dem ortsfesten Zwischenspeicher 11 zu bringen.

Der Zwischenspeicher 11 besteht aus mehreren Hochgattern 12, die parallel zueinander angeordnet sind und paarweise zwischen sich jeweils einen Lagergang 13 bilden. Jedes der Hochgatter 12 ist mit einer Vielzahl von Lagerdornen 14 ausgestattet.

Wie man leicht nachvollziehen kann, sitzen die Lagerdorne 14 nebeneinander und in Etagen übereinander und kragen in Richtung auf den Lagergang 13 aus.

In jedem der Lagergänge ist ein Lagergerät 15 zwischen den beiden Endseiten 21 und 32 des Lagergangs hin- und herfahrbar.

Jedes der Lagergeräte weist eine Grundplattform auf, die mit Rädern 16 bestückt ist, und die einen Aufzug 17 trägt, an welchem ein Paar von Tragdornen 18 sitzt. Das Paar von Tragdorn 18 dient zur Übernahme der von einem Förderwagen angelieferten Vollspulen und zur Weitergabe der Vollspulen an die Lagerdorne 14 eines der Hochgatter, sowie zur Übernahme der Vollspulen einer Spulspindel und zur Weitergabe derselben an die Einzelförderer 20. Hierauf wird noch eingegangen werden.

Jedenfalls ist es eine besondere Ausführungsform der Erfindung, die Tragdorne jeweils paarweise vorzusehen.

Die Tragdorne 18 sind mittels des Aufzugs höhenverfahrbar, wobei der Aufzug 17 um die Schwenkachse 19 derart schwenkbar ist, daß ein Tragdorn 18 des Lagergeräts 15 entweder mit einem Tragdorn eines Förderwagens oder mit einem Lagerdorn fluchtet.

In einer besonderen Ausführungsform sind die Lagergeräte zweigeteilt. Ein erster Teil ist fahrbar in einem Lagergang 13, und ein zweiter Teil sitzt stationär jeweils vor einem Lagergang. Der stationäre Teil ist höhenverfahrbar zwischen den Förderbahnhöhen I,II der Förderbahnen 10.1, 10.2 sowie um 180 Grad schwenkbar. Hierdurch werden die angelieferten Vollspulen zunächst auf den stationären Teil übernommen, und anschließend auf den fahrbaren Teil zur Zwischenspeicherung weitergegeben.

Die Einzelförderer 20 bringen die zwischengespeicherten Vollspulen während des Schichtbetriebs der Einzelkontrolle 8 und der Verpackungsstation 9 dorthin.

Hierzu sind die Einzelförderer zwischen einer der Endseiten 21 des Lagergangs 13 und der Einzelkontrolle 8 sowie der Verpackungsstation 9 fahrbar.

Im vorliegenden Fall erfolgt dies auf der umlaufenden Transportbahn 22, welche als Besonderheit zwischen der Verpackungsstation 9 und der Endseite 21 der Lagergänge 13 eine Pufferstrecke 23 in Form paralleler Umwegschleifen 24 aufweist.

Diese Transportbahn wird von den Einzelförderern in der Richtung 25 durchfahren, wobei im Bereich der Endseite 21 der Lagergänge 13 jeder Einzelförderer 20 in eine Halteposition bringbar ist, in welcher die Weitergabe der Vollspulen mittels des Lagergeräts erfolgt.

Zur Weitergabe der Vollspulen weist jeder Einzelförderer 20 einen Tragdorn 26 auf, welcher in jeder der Haltepositionen mit seinem freien Ende horizontal in den Lagergang weist. Im mittleren der drei Lagergänge ist der Aufzug derart geschwenkt und auf derartige Höhe gefahren, daß zwei Tragdorne 26 zweier benachbarter Einzelförderer 20 durch die beiden Tragdorne 18 des Aufzugs gleichzeitig bedient werden können. Hierauf wird noch eingegangen werden.

Wie Fig. 3 zeigt, besteht die umlaufende Transportbahn 22 aus einer Rollenbahn 44. Die Rollenbahn 44 wird von einer Vielzahl von einzelnen Laufrollen 45 gebildet, die drehbar in einem Lagerbock 46 sitzen. Der Lagerbock 46 stützt sich mit einem Fußgestell 47 gegenüber dem Boden ab.

Jeder Einzelförderer 20 besteht aus einer Transportplattform 43, die mit ihrer Unterseite auf der Rollenbahn entlangläuft. Die Transportplattform 43 weist den auskragenden Tragdorn 26 auf, der hier mit einer Vollspule 6 bestückt ist

Wie Fig. 3 zeigt, kragen die Tragdorne 26 der Einzelförderer 20 in horizontaler Richtung aus. Die Spulen liegen also während des Transports horizontal. Die Verpackung soll aber mit vertikal liegenden Spulen erfolgen. Hierzu müssen die Spulen um 90° gedreht werden. Im Ausführungsbeispiel gemäß Fig 2 ist hierzu vor der Verpackungsstation 9 eine Kippeinrichtung 29 vorgesehen, welche die darüberlaufenden Tramnsportplattformen um 90° kippt. Alsdann laufen die in dieser gekippten Ansicht kreisförmig gezeichneten Vollspulen in die Verpackungsstation, um dort palettiert zu werden. Hinter der Verpackungsstation wird die Kippung um 90° durch eine entgegengesetzt wirkende Kippeinrichtung 29 rückgängig gemacht.

Hierzu ist die Transportplattform mit einer rechtwinklig zu ihr angeordneten Rücken-Plattform 43.1 versehen, welche während des Transports des Einzelförderers 20 von dem Zwischenspeicher zur Einzelkontrolle und zur Verpackungsstation aufrecht steht. Das Kippen der Transportplattform erfolgt nun dadurch, daß die gezeigte Rollenbahn 44 gegen den Uhrzeigersinn verdreht wird, wobei gleichzeitig die Rückenplattform 43.1 von einer übernehmenden (in Fig. 1 gezeigten) Rollenbahn so unterstützt wird, daß ein kontinuierliches Drehen der Transportplattform um 90° gegen den Uhrzeigersinn während des Laufens auf der Rollenbahn erfolgt. Sobald die Transportplattform 20 auf der übernehmenden (nicht gezeigten) Rollenbahn fährt, endet die gezeigte (übergebende) Rollenbahn 44.

Das Zurückkippen der Transportplattform erfolgt auf dieselbe Weise mit der Drehrichtung im Uhrzeigersinn.

In der Kontrolle werden Minderqualitäten ausgesondert. Derartige Minderqualitäten können aber gegebenenfalls noch verkauft werden. Hierfür ist allerdings Voraussetzung, daß eine entsprechend hohe Anzahl von Spulen in Minderqualität zur Verfügung steht, um eine Palettierung zu ermöglichen. Durch Zurückschleusen der Spulen minderer Qualität lassen sich entsprechend hohe Anzahlen von Spulen im Zwischenspeicher ansammeln.

Da aus diesem Grund ein nicht näher gezeigter Bereich des Zwischenspeichers zur Zwischenspeicherung von Spulen reserviert ist, die in der Einzelkontrolle 8 als Spulen minderer Qualität 28 aussortiert wurden, ist zum Zurückfahren der aussortierten Vollspulen minderer Qualität 28 hinter der Einzelkontrolle 8 eine Umgehungsstrecke 27 der Verpackungsstation 9 vorgesehen.

Weiterhin ist in jedem der Bedienungsgänge 4.1, 4.2 ein Aufzug 40 und ein Notbedienungswagen 41 vorgesehen, mit welchem Spulen, die im manuellen Notbetrieb von Hand auf den Notbedienungswagen aufgeladen wurden, auf das Niveau des Förderwagens anhebbar sind.

In der gezeigten bevorzugten Ausführungsform ist der Notaufzug an dem dem Zwischenspeicher zugewandten Ende des zweiten Astes der Hinspur angeordnet, so daß der Notaufzug nicht den fortlaufenden Förderbetrieb der Förderwagen behindern kann.

Die Handhabung der Vollspulen:
Im vorliegenden Fall werden auf jeder der Spulspindeln vier Spulen gleichzeitig produziert.

Jeder Doffer 5 weist zwei parallele Arbeitsarme 42 auf, die voneinander den Abstand der Förderteilung T einnehmen, und zur Aufnahme der halben Anzahl der auf einer Spulspindel gleichzeitig produzierten Spulen ausgelegt ist. Im vorliegenden Fall nimmt also jeder der Arbeitsarme 42 zwei Vollspulen 6 auf.Dieser Vorgang ist im einzelnen z.B. in der DE -A-29 39 675 beschrieben, auf die diesbezüglich im vollen Umfang Bezug genommen wird.

Verlangt eine Spulmaschine 2 nach einem Wechsel der Spulen, so fährt der zugehörige Doffer 5 die entsprechende Spulmaschine 2.1, 2.2, 2.3, 2.4 an und ruft einen freien Förderwagen 7 herbei.

Jeder Förderwagen 7 weist zwei Tragdorne 7.1 auf, welche voneinander ebenfalls den Abstand T der Förderteilung einnehmen.

Der herbeigerufene Förderwagen 7 positioniert sich in der zugehörigen Dofferposition, so daß die Tragdorne 7.1 des Förderwagens 7 exakt koaxial zu den noch den Spulmaschinen zugewandten Arbeitsarmen 42 des Doffers liegen.

Der Doffer übernimmt auf jeden seiner beiden Arbeitsarme 42 jeweils die Hälfte der Vollspulen einer Spulspindel, hier also zwei Stück, und schwenkt anschließend seine Arbeitsarme um 180°, so daß die mit Vollspulen bestückten Arbeitsarme den Tragdornen 7.1 des wartenden Förderwagens zugeordnet sind, und exakt mit diesen fluchten. Die Schwenkbewegung erfolgt um die vertikale Schwenkachse 48.

Der Doffer schiebt nun die jeweils zwei Vollspulen von seinen Arbeitsarmen auf die Tragdorne des Förderwagens, die ebenfalls zur Aufnahme von zwei Vollspulen ausgelegt sind.

Der frisch beladene Förderwagen fährt nun mit seiner Ladung auf der Hinspur 30 seiner Förderbahn 10.1, 10.2 bis vor eine Endseite 21 eines der Lagergänge 13, wobei jedem der Lagergänge 13 einer der Bedienungsgänge 4.1, 4.2 fest zugeordnet ist. Dort weisen die Tragdorne 7.1 des Förderwagens 7 in den Lagergang, wobei der Förderwagen in einer Position anhält, in welcher seine Tragdorne in eine fluchtende Position mit den Tragdornen 18 am Aufzug 17 des Lagergeräts 15 bringbar sind. Der Aufzug 17 des Lagergeräts 15 fährt nun die ebenfalls mit der Förderteilung T beabstandeten Tragdorne 18 auf die Förderhöhe I bzw II, welche der Förderwagen angefahren hat. Anschließend fährt das Lagergerät 15 in dem Lagergang 13 auf den Förderwagen zu, bis die Tragdorne 18 des Lagergeräts 15 mit den Tragdornen 7.1 des Förderwagens 7 fluchten, und übernimmt die jeweils zwei Vollspulen.

Der abgeladene Förderwagen fährt nun auf der Rückspur 31 an dem Leerhülsenspeicher 33.1 bzw 33.2 vorbei, lädt dort die für eine Spulspindel erforderliche Anzahl von Leerhülsen auf, und wird dann vorübergehend auf dem als Sackgasse 34 ausgebildeten Teil der Rückspur 31 in Warteposition gebracht, bis ein Doffer Leerhülsen anfordert.

Das beladene Regalbediengerät fährt nun in Richtung zur anderen Endseite 21 des Lagergangs 13, wobei der Aufzug auf eine Höhe gefahren wird, in welcher zwei nebeneinander liegende Tragdorne des Hochgatters unbesetzt sind. Anschließend erfolgt eine Schwenkbewegung um 90°, so daß die Tragdorne des Lageräts 15 fluchtend mit den freien Tragdornen des Hochgatters übereinstimmen. Die Vollspulen werden alsdann an das Hochgatter übergeben und zwischengespeichert.

Diese Funktionen wiederholen sich fortlaufend während eines ganzen 24h Tages.

Sofern nun die Einzelkontrolle und die Verpackungsstation besetzt sind, werden die Einzelförderer 20 an einer Endseite 21 des Lagergangs 13 in Position gebracht. Jeder der Einzelförderer 20 besitzt zwar nur einen einzigen Tragdorn 26. Die Abmessungen der Transportplattformen sind jedoch so gewählt, daß die zwei Tragdorne zweier dicht an dicht liegender Einzelförderer ebenfalls den Abstand der Förderteilung T voneinander einnehmen.

In dieser Position können die Tragdorne 18 der Lagergeräte 15 mit den beiden Tragdornen 26 der beiden Transportplattformen 20 in fluchtende Position gebracht werden.

Hierzu nimmt das Lagergerät von zwei benachbarten Tragdornen einer Etage je eine Vollspule ab, schwenkt um 90° in Richtung zu den Einzelförderern, und fährt die Tragdorne 18 auf eine Höhe, die mit der Höhe der Tragdorne 26 der Einzelförderer 20 übereinstimmt.

Danach werden die beiden in Halteposition befindlichen Einzelförderer 20 angefahren und zugleich beladen, so daß diese zur Einzelkontrolle und zur Verpackungsstation abfahren können.

### BEZUGSZEICHENAUFSTELLUNG

- 1: Spinnanlage
- 2: Spulmaschine
- 3: Spulmaschinen-Kolonne
- 4.1: erster Bedienungsgang
- 4.2: zweiter Bedienungsgang
- 5: Doffer
- 5.1: Doffer-Fahrweg
- 6: Vollspule
- 7: Förderwagen
- 7.1: Tragdorn am Förderwagen
- 8: Einzelkontrolle
- 9: Verpackungsstation
- 10.1: erste Förderbahn
- 10.2: zweite Förderbahn
- 11: Zwischenspeicher
- 12: Hochgatter
- 13: Lagergang
- 14: Lagerdorn
- 15: Bediengerät
- 16: Rad
- 17: Aufzug
- 18: Tragdorn am Aufzug
- 19: Schwenkachse des Aufzugs
- 20: Einzelförderer
- 21: Endseite eines Lagergangs
- 22: umlaufende Transportbahn
- 23: Pufferstrecke
- 24: parallele Umwegschleife
- 25: Bewegungsrichtung der beladenen Einzelförderer
- 26: Tragdorn des Einzelförderers
- 27: Umgehungsstrecke
- 28: Spule minderer Qualität
- 29: Kippeinrichtung
- 30: Hinspur der Förderbahn
- 31: Rückspur der Förderbahn
- 32: eine Stirnseite des Lagergangs
- 33: Leerhülsenspeicher
- 33.1: einzelne Leerhülse
- 34: Sackgasse
- 35: Umkehrbogen
- 36: erster Ast
- 37: zweiter Ast
- 38: Parallelweiche
- 39: Drehweiche
- 40: Aufzug
- 41: Notbedienungswagen
- 42: Arbeitsarm
- 43: Transportplattform
- 43.1: Rücken-Plattform
- 44: Rollenbahn
- 45: Laufrolle
- 46: Lagerbock
- 47: Fußgestell
- 48: Schwenkachse
- T: Förderteilung
- 101: erstes Bahnstück
- 102: zweites Bahnstück
- 103: Längsbereich
- 104: Übergabebahn
- 105: Übernahmebahn
- 106: Förderrichtung
- 107: Neigung der Übergabebahn
- 108: Kippbewegung
- 109: Stückgut
- 110: Transportpalette
- 111: erste Auflagefläche
- 112: zweite Auflagefläche
- 113: Befestigungseinrichtung
- 114: Neigung der Übernahmebahn
- 115: V-förmige Kehle
- 116: Bereich der abnehmenden Neigung
- 118: Rollenabstand

## Patentansprüche

1. Fördereinrichtung mit einer Transportbahn (22) für den innerbetrieblichen Materialfluß von Stückgut, wobei
die Transportbahn (22) in einem Längsbereich eine Übergabebahn (104) und eine dazu parallele und benachbarte Übernahmebahn (105) aufweist, und wobei
die Übergabebahn (104) in Förderrichtung gesehen eine zur Übernahmebahn (105) so weit zunehmende Neigung aufweist, daß das Stückgut beim Überfahren eine Kippbewegung zur Übernahmebahn vollendet,
dadurch gekennzeichnet, daß das Stückgut aus einzelnen Transportpaletten (110) zum Palettieren von Gegenständen (6) besteht, von welchen jede Transportpalette (110) zwei V-förmig angeordnete Auflageflächen (111, 112) sowie eine Befestigungseinrichtung (113) zum Halten der Gegenstände (6) besitzt.

2. Fördereinrichtung nach Anspruch 1,
dadurch gekennzeichnet, daß
die Transportpalette (110) aus zwei Plattformen (43, 43.1) derart zusammengesetzt ist, daß sie mit ihren voneinander abgewandten Außenseiten die Auflageflächen (111, 112) bilden, mit denen die Plattformen (43, 43.1) auf der Übergabebahn (104) einerseits und der Übernahmebahn (105) in dem gemeinsamen Längsbereich (103) von Übergabebahn (104) und Übernahmebahn (105) aufliegen.

3. Fördereinrichtung nach Anspruch 2,
dadurch gekennzeichnet, daß
die Transportpalette (110) derart gebildet ist, daß zwei Transportplattformen (43, 43.1) mit den Auflageflächen (111, 112) rechtwinklig zusammengesetzt sind.

4. Fördereinrichtung nach Anspruch 2 oder 3,
dadurch gekennzeichnet, daß
die Befestigungseinrichtung (113) ein auskragender Tragdorn (26) ist, der mit einem Ende in einer der Plattformen (43, 43.1) verankert ist.

5. Fördereinrichtung nach einem der Ansprüche 1 - 4,
dadurch gekenzeichnet, daß
die Transportpaletten (110) in Anlage beider Auflageflächen (111, 112) auf jeweils der Übergabebahn (104) bzw. der Übernahmebahn (105) des gemeinsamen Längsbereiches (103) geführt werden.

6. Fördereinrichtung nach einem der Ansprüche 1 - 5,
dadurch gekennzeichnet, daß
im Verlauf der Förderbahn (22) zwei als Kippeinrichtungen (29) ausgebildete Längsbereiche (103) derart hintereinander angeordnet sind, daß die Transportpaletten (110) einmal in einer Kipprichtung gekippt und die Kippung durch eine entgegengesetzt wirkende Kippeinrichtung (29) rückgängig gemacht wird.

7. Verwendung der Fördereinrichtung nach einem der Ansprüche 1 - 6,
zum Transport von Spulen (6), welche mit Fäden aus Kunstfasern bewickelt sind, wobei die Spulen (6) mit im wesentlichen horizontaler Spulenachse zu einer Verpackungsstation (9) gefördert werden und vor Erreichen der Verpackungsstationion (9) so weit gekippt werden, daß in der Verpackungsstation (9) die Spulenachse im wesentlichen vertikal steht.

8. Verfahren zum Transport von Spulen (6) aus einer Spinnanlage (1) zur Herstellung von Kunstfasern mit einer Fördereinrichtung nach einem der Ansprüche 1 - 6, wobei
aus einer Vielzahl von Spulen (6) einzelne Spulen (6) auf jeweils einer Transportpalette (110) befestigt werden und zu einer Verpackungsstation (9) gefördert werden, wobei jede Transportpalette (110) vor Erreichen der Verpackungsstation (9) gekippt und hinter der Verpackungsstation (9) zurückgekippt wird, um erneut mit einer der einzelnen Spulen (6) beladen zu werden.

9. Transportpalette (110) zur Aufnahme und Förderung von Gegenständen (6) mit folgenden Merkmalen:
die Transportpalette (110) weist
zwei V-förmig angeordnete Plattformen (43, 43.1), sowie
eine Befestigungseinrichtung (113) zum Befestigen der Gegenstände auf, wobei
die Plattformen (43, 43.1) mit ihren voneinander abgewandten Außenseiten zwei Auflageflächen (111, 112) derart bilden, daß die Transportpalette (110)
entweder mit der einen (111) oder der anderen (112) Auflagefläche auf einer
Rollenbahn (44) aufliegbar und transportierbar ist.

## Claims

1. Conveying device having a conveying track (22) for the in-house material handling of small consignments, wherein the conveying track (22) in one longitudinal region has a transfer conveyor (104) and, parallel and adjacent thereto, a take-over conveyor (105), and the transfer conveyor (104) when viewed in conveying direction has an inclination increasing to such an extent towards the take-over conveyor (105) that the small consignment as it travels over completes a tilting motion towards the take-over conveyor, characterized in that the small consignment comprises individual transport pallets (110) for the palletization of articles (6), each of which transport pallets (110) has two supporting surfaces (111, 112) disposed in the shape of a V as well as a fastening device (113) for holding the articles (6).

2. Conveying device according to claim 1,
characterized in that
the transport pallet (110) is composed of two platforms (43, 43.1) in such a way that the outsides, which are remote from one another, of said platforms form the supporting surfaces (111, 112) with which the platforms (43, 43.1) rest on the transfer conveyor (104), on the one hand, and the take-over conveyor (105) in the common longitudinal region (103) of transfer conveyor (104) and take-over conveyor (105).

3. Conveying device according to claim 2,
characterized in that
the transport pallet (110) is formed in such a way that two transport platforms (43, 43.1) are assembled with the supporting surfaces (111, 112) at right angles to one another.

4. Conveying device according to claim 2 or 3,
characterized in that
the fastening device (113) is a projecting supporting mandrel (26) which is anchored by one end in one of the platforms (43, 43.1).

5. Conveying device according to one of claims 1 to 4,
characterized in that
the transport pallets (110) are guided with both supporting surfaces (111, 112) in contact with the transfer conveyor (104) and the take-over conveyor (105) respectively of the common longitudinal region (103).

6. Conveying device according to one of claims 1 to 5,
characterized in that
in the course of the conveying track (22) two longitudinal regions (103) designed as tilting devices (29) are disposed successively in such a way that the transport pallets (110) are tilted once in one tilting direction and then the tilting is reversed by a tilting device (29) acting in the opposite direction.

7. Use of the conveying device according to one of claims 1 to 6,
for transporting bobbins (6) which are wound with yarns made of man-made fibres, the bobbins (6) being conveyed with a substantially horizontal bobbin axis to a packaging station (9) and, before reaching the packaging station (9), being tilted to such an extent that in the packaging station (9) the bobbin axis is positioned substantially vertically.

8. Method of transporting bobbins (6) from a spinning installation (1) for manufacturing man-made fibres having a conveying device according to one of claims 1 to 6, whereby of a plurality of bobbins (6) individual bobbins (6) are each fastened on one transport pallet (110) and conveyed to a packaging station (9), each transport pallet (110) prior to reaching the packaging station (9) being tilted and downstream of the packaging station (9) being tilted back in order to be reloaded with one of the individual bobbins (6).

9. Transport pallet (110) for receiving and conveying articles (6), having the following features:
the transport pallet (110) has
two platforms (43, 43.1) disposed in a V shape, as well as
a fastening device (113) for fastening the articles,
the platforms (43, 43.1) with their remote outsides forming two supporting surfaces (111, 112) in such a manner that the transport pallet (110)
may rest and be conveyed either with the one (111) or the other (112) supporting surface on a
roller conveyor (44).

## Revendications

1. Dispositif de transport comprenant un chemin de transport (22) pour l'acheminement de charges isolées à l'intérieur d'une entreprise, le chemin de transport (22) présentant, sur une zone longitudinale, un chemin de transfert (104) et un chemin de reprise (105) parallèle et voisin au chemin de transfert, et le chemin de transfert (104) présentant, dans le sens de transport, une inclinaison qui va en augmentant vers le chemin de reprise (105) de manière que les charges effectuent un mouvement de basculement en passant sur le chemin de reprise, caractérisé par le fait que les charges sont constituées par des palettes de transport (110) individuelles pour la palettisation d'objets (6), chaque palette de transport (110) possédant deux surfaces d'appui (111, 112) disposées en V ainsi qu'un dispositif de fixation (113) pour maintenir les objets (6).

2. Dispositif de transport suivant la revendication 1, caractérisé par le fait que la palette de transport (110) est composée de deux plates-formes (43, 43.1) de manière que les côtés extérieurs des plates-formes, éloignés l'un de l'autre, forment les surfaces d'appui (111, 112) par lesquelles les plates-formes (43, 43.1) reposent d'une part sur le chemin de transfert (104) et d'autre part sur le chemin de reprise (105) dans la zone longitudinale commune (103) du chemin de transfert (104) et du chemin de reprise (105).

3. Dispositif de transport suivant la revendication 2, caractérisé par le fait que la palette de transport (110) est réalisée de manière que deux plates-formes de transport (43, 43.1) soient réunies avec leurs surfaces d'appui (111, 112) à angle droit.

4. Dispositif de transport suivant la revendication 2 ou 3, caractérisé par le fait que le dispositif de fixation (113) est constitué par un mandrin de support (26) en porte-à-faux dont une extrémité est ancrée dans l'une des plate-formes (43, 43.1).

5. Dispositif de transport suivant l'une des revendications 1 à 4, caractérisé par le fait que les palettes de transport sont guidées avec les deux surfaces d'appui (111, 112) en application sur le chemin de transfert (104) et sur le chemin de reprise (105) dans la zone longitudinale commune (103).

6. Dispositif de transport suivant l'une des revendications 1 à 5, caractérisé par le fait que sur le trajet de transport (22), deux zones longitudinales (103) réalisées sous forme de dispositifs de basculement (29) sont disposées l'une derrière l'autre de manière que les palettes de transport (110) soient basculées une première fois dans un sens et une deuxième fois en sens inverse par un dispositif de basculement (29) à action inverse.

7. Utilisation du dispositif de transport suivant l'une des revendications 1 à 6 pour le transport de bobines (6) sur lesquelles sont enroulés des fils de fibres synthétiques, les bobines (6) étant transportées vers un poste d'emballage (9), leur axe étant essentiellement horizontal, et étant basculées, avant d'atteindre le poste d'emballage, (9) de telle manière que leur axe soit sensiblement vertical au poste d'emballage (9).

8. Procédé de transport de bobines (6) à partir d'une installation de filage (1) pour la fabrication de fibres synthétiques, à l'aide d'un dispositif de transport suivant l'une des revendications 1 à 6, procédé suivant lequel des bobines individuelles (6) parmi une multitude de bobines (6) sont fixées chacune sur une palette de transport (110) pour être transportées vers un poste d'emballage (9), chaque palette de transport (110) étant basculée avant d'atteindre le poste d'emballage (9) et étant basculée en arrière derrière le poste d'emballage (9) pour pouvoir être chargée de nouveau avec une des bobines individuelles (6).

9. Palette de transport (110) pour recevoir et transporter des objets (6), la palette de transport (110) présentant deux plate-formes (43, 43.1) disposées en V, ainsi qu'un dispositif de fixation (113) pour fixer les objets, les plate-formes (43, 43.1) formant, par leurs côtés extérieurs éloignés l'un de l'autre, deux surfaces d'appui (111, 112) de manière que les palettes de transport (110) puissent être transportées par application soit de l'une des surfaces d'appui (111), soit de l'autre (112), sur un chemin de rouleaux (44).
